# EUROPEAN PATENT APPLICATION

(11) **EP 2 592 571 A1**
(43) Date of publication of application: **15.05.2013**
(21) Application number: 11188864.0
(22) Date of filing: 11.11.2011
(51) Int. Cl.: G06F 17/30

(54) **Method and system for enhancing metadata**

(71) Applicant: Liberty Global Europe Holding B.V., 1119 PE Schiphol-Rijk (NL)
(72) Inventor: Ernbert, Michael, 1119 PE Schiphol-Rijk (NL); Hota, Bhubanananda, 1119 PE Schiphol-Rijk (NL)
(74) Representative: Ketelaars, Maarten F.J.M.

(57) **Abstract**

The invention provides a method for retrieving enhanced metadata relating to a media object, the method comprising, in a media content delivery network with a Consumer Premises Equipment (CPE) connected via said network to a server node comprising a search proxy device, said search proxy device connected to content servers on a further network,
- the search proxy device receiving a request for information about a media object from the CPE ,
- the search proxy device forming, on the basis of the request, at least one dedicated request for a content server in a format suitable for that content server,
- the search proxy device transmitting the at least one dedicated request to the at least one selected content server over the further network,
- the search proxy device receiving a response from a content server comprising metadata related to the transmitted at least one dedicated request,
- the search proxy device preferably but not necessarily translating the received response into a defined format, in particular a defined metadata description format,
- transmitting a reply comprising metadata in the defined format to the CPE.

## Description

### Field of the invention

The invention relates to a method for retrieving metadata relating to a media object. The invention further relates to a device and to a system for retrieving metadata. The invention may be advantageously applied in systems arranged to facilitate the delivery of media content to households, such as a head end of a cable network in cooperation with consumer premises equipment.

### Background of the invention

Media content delivery systems, for example delivery systems deployed by cable television providers, often have multiple information and media delivery systems. An example of content delivered by information systems is the Electronic Program Guide (EPG) which provides schedule information and metadata relating to upcoming broadcasts. An example of a media delivery system is a video on demand (VOD) application, that allows a user to order and watch a program. Consumer Premises Equipment deployed by a provider, such as a cable tv provider, also can function as a gateway to media content available on a local network of the user of the CPE. Thus, the CPE allows access to a plurality of media objects, and to metadata about said objects.

From published application US 2010 / 0 293 579 A1, a method for use in a video content delivery system for searching particular media objects in VOD provider's database. US 2010 / 0 293 579 discloses a method for downloading a set of metadata relating to a particular program from an EPG source, and using that metadata to complete incomplete metadata from a VOD provider for that same program. Thus, programs offered by VOD providers may be searched using the metadata queries based on the EPG metadata.

The system of US 2010 / 0 293 579 A1 can thus query a second source to complete incomplete metadata from a first source. However, US 2010 / 0 293 579 only queries predetermined video content sources (EPG sources, VOD providers) for metadata information. In addition, the query is done from a DVR (a consumer premises device) and can yield only text-based metadata, such as title, actor names, etc. Finally, US 2010 / 0 293 579 provides for retrieving metadata related to programs, not enhanced metadata related to metadata (i.e. further information about a director, actor, etc).

### Summary of the invention

It is a goal of the invention to provide a method, device, and system that provides an improved system for retrieving metadata.

In this context, the term "media" is to be interpreted as comprising video, audio, graphics, data or text or any combination thereof.

A goal is met by providing, in a first aspect, a method for retrieving enhanced metadata relating to a media object, the method comprising, in a digital network with a Consumer Premises Equipment (CPE) connected via said network to a server node comprising a search proxy device, said search proxy device connected to content servers on a further network,
- the search proxy device receiving a request for information about a media object or metadata of a media object from the CPE ,
- the search proxy device forming, on the basis of the request, at least one dedicated request for a content server in a format suitable for that content server,
- the search proxy device transmitting the at least one dedicated request to the at least one selected content server over the further network,
- the search proxy device receiving a response from a content server comprising metadata related to the transmitted at least one dedicated request,
- the search proxy device preferably but not necessarily translating the received response into a defined format, in particular a defined metadata description format,
- transmitting a reply comprising metadata in the defined format to the CPE.

The network may advantageously be digital. It may be a hybrid fibre-coaxial (HFC) network, and can be generally be described as a media content delivery network. However, it will be clear that the invention may be applied over any type of network. The server node may be the head end of a HFC network. The CPE can be a set-top box in a consumer household, bought, rented, leased, or received free of charge by the consumer. In an embodiment, the CPE only needs to communicate over a network with the server node, allowing for a relatively simple network module in the CPE.

In advantageous embodiments, the search proxy may be a website proxy, and/or the further network may be the internet of any TCP/IP Local Area Network or Wide Area Network, and/or the content servers may be websites, and/or the search proxy may communicate with the content servers using the HTTP protocol. The search proxy can advantageously be centrally and dynamically updated. For example, if a website is changed (the layout or data formatting is changed) the search proxy can be updated for the new situation, and each connected CPE will automatically benefit from the central update.

The request for information about a media object may originate from a user of the CPE. The user may for example be browsing an Electronic Program Guide (EPG) or a Video on Demand (VOD) catalogue, or other information obtainable from the CPE, in particular provided to the CPE by the server node or head end. Presented with a media object, such as a scheduled broadcast or an available movie in VOD, the user may request further information about the object. In particular, the user may consult available metadata about the object and request further information, or enhanced metadata, for it. Metadata may comprise the title of the program or movie. Metadata may also comprise the name of an actress or actor, a director, writer, production company, year of production, awards, critical reception, statistical data relating to critical reception, etc. The request for more information or enhanced content is then forwarded by the CPE to the server node, such as a head end of a cable network.

A particularly advantageous aspect of the invention is that the search proxy of the server node has a list of content servers, for example trusted or partner websites, and is arranged to form a dedicated query to each of the servers on the basis of a general request for enhanced metadata from a CPE. In an advantageous and preferred embodiment, the search proxy is also arranged to translate the returned results from the content servers into a pre-determined unified format for use by the CPE. However, the search proxy may also transmit the "raw data" and let the CPE do any necessary processing of the data prior to presentation to the user.

In a second aspect of the invention, the method further comprises
- the CPE scanning devices to which it is connected over a local network,
- the CPE deriving metadata from scan results of said scanning,
- the CPE sending a request for information about a media object to the search proxy device, said media object being indicated by the additional metadata.

In this case the media object or media object metadata for which information is sought is not obtained from e.g. EPG or VOD catalogue or any other source in the server node, but from equipment in the user's own local network. Often this metadata will comprise a file name of a media object. Some file types actually yield more information than just the file name. Music data types often have metadata fields for artist name, etc.

Scanning the devices may comprise read access to shared network drives as connected to the local network, for example network drives of a personal computer (PC). Multiple local networks may be involved. For example, a CPE may be arranged to scan network drives over a wired Ethernet, access a mobile device via Bluetooth, and gain access to a wireless content server via Wifi. Scanning a device over a local network may comprise gaining read access to a storage device associated with the device, and retrieving a list of file names on the storage device. The scanning process may further comprise reading parts of a file on the storage device in order to obtain further metadata, such as information fields, media encoding types, etc. Scanning a device may also be performed by using a specific interface of that device. For example, a PC in a local network may have a webserver providing a search interface.

In an embodiment of the invention, the derived metadata comprises a file name of a media file. A file name is generally available, and usually contains metadata related to the media file, such as a title of the work, artist name, album name, etc. Multiple metadata items may be provided in a single file name, for example separated by a separating sign, like a space or underscore character.

In an embodiment of the invention, the CPE or the search proxy device derive further metadata for use in a dedicated request by parsing the file name. Parsing may comprise splitting the file name along the separating signs like spaces, underscore characters etc, and analyzing the split pieces. Parsing may also comprise cross referencing the file name or parts of the file name against a database of known metadata. For example, a specific part of the file name may thus be recognized as an artist name or the name of a movie. Advantageously, this parsing, in particular the cross referencing, may yield metadata with a high level of accuracy. Parsing, in particular cross referencing may advantageously be done in the server node, as large database for cross referencing may be available or accessible there.

In an embodiment of the invention, the search proxy device has a cache storage for storing metadata in a defined format. The method may then further comprise
- by the search proxy device, upon receiving a request for information about a media object from the CPE, checking the cache storage for said information;
- in case said information is found in the cache storage, transmitting a reply comprising said information to the CPE. In this manner, advantageously, time consuming requests to external servers can be prevented by recycling earlier found and stored results.

In an embodiment of the invention, the method further comprises
- by the search proxy device, retrieving media object data from a cache list, said cache list being managed to store information about media objects becoming available in the server node,
- by the search proxy device, forming, on the basis of the media object data, at least one dedicated request related to said media object for at least one selected content server, in particular a website, in a format suitable for said at least one selected content server,
- by the search proxy device, transmitting the at least one dedicated request to the at least one selected content server over the further network,
- by the search proxy device, receiving a response from said at least one selected content server comprising metadata related to the transmitted at least one dedicated request,
- by the search proxy device, translating the received response into metadata in a defined format, in particular a defined metadata description format;
- by the search proxy device, storing said metadata in a defined format in the cache storage.

A cache list, also termed a cache warming list or queue, has information about media objects that are (becoming) available in the head end for eventual transmittal to CPE's and users, and is maintained or managed, for example by the search proxy device. Alternatively, another component inside or outside the server node can be responsible for managing the contents of the list. The search proxy device reads items from the cache list, queries external servers and receives and stores the query results in a cache. When a user subsequently requests the same information, said information is already available in the cache and can advantageously be transmitted to the user without delay. In an embodiment, the search proxy device is arranged to handle requests coming from CPE's with priority over requests formed from the cache warming list. In other words, the cache warming list requests can be handled as a background process.

In an embodiment of the invention the method comprises the action of checking the authorisation of the CPE prior to forming the at least one dedicated search request.

The invention further provides a search proxy device for retrieving enhanced metadata relating to a media object, the search proxy device being connected with a Consumer Premises Equipment (CPE) via a digital network, in particular a hybrid fiber-coaxial (HFC) network, said search proxy device being further connected to content servers on a further network, wherein the search proxy device is arranged to
- receive a request for information about a media object or metadata of a media object from the CPE,
- form, on the basis of the request, at least one dedicated request for a content server, in particular a website, in a format suitable for that content server,
- transmit the at least one dedicated request to the at least one selected content server over the further network,
- receive a response from a content server comprising metadata related to the transmitted at least one dedicated request,
- translate the received response into a defined format, in particular a defined metadata description format,
- transmit a reply comprising metadata in the defined format to the CPE.

The invention also provides a system of a search proxy device having any of the features described above and a Consumer Premises Equipment, the CPE being arranged to
- scan devices to which is connected over a local network,
- derive metadata from scan results of said scanning,
- send a request for information about a media object to the WSP, said media object being indicated by the derived metadata.

The invention also provides a system of a search proxy device in a server node in communication with at least a CPE and a cache storage associated with said device. The search proxy device has access to a managed cache list arranged, which is managed to receive, store, and make available information about media objects available from the server node. The invention also provides a method for cache management involving said search proxy device, cache storage and cache list. The search proxy device is arranged to handle requests from the CPE for metadata relating to media objects, as described above. The search proxy device is also arranged to retrieve media object information from the cache list, and to request and retrieve metadata related to said media objects, and to store said retrieved metadata, possibly in a defined metadata format, in the cache storage.

The invention provides, in a third aspect, a method for generating recording recommendation data, the method comprising, in a digital network with a Consumer Premises Equipment (CPE) connected via said network to a server node comprising a Recommendation Engine for generating recording recommendation data, said Recommendation Engine connected to a Personalisation Store for storage and retrieval of CPE users' profile data,
- generating recording recommendation data for a user in the Recommendation Engine in dependence of a user's profile data from the Personalisation Store
- preparing a message comprising the recommendation data
- sending said message to the CPE over the network in response to a request of the CPE.

The digital network may advantageously be a hybrid fibre-coaxial (HFC) network. However, the invention may be applied over any type of network. The server node may be the head end of a HFC network. The CPE can be a set-top box in a consumer household, bought, rented, leased, or received free of charge by the consumer.

The recording recommendation data, also named Automatic Recommended Recordings (ARR), comprises details required for the CPE to record a broadcast program. These details may comprise the time of broadcast and the channel. They may also comprise a specific EPG identifier code identifying the broadcast. Known systems generate recommendation data in the CPE. The invention advantageously determines the recording recommendation data in the server node, in particular and preferably in the head end, so that information from sources not generally available in the CPE may be consulted. In particular, information about the user profile in the Personalisation Store may be utilized. For example, past recordings may be analyzed in generating ARR data. A particular problem to be solved when generating ARR data remote from the CPE, is how to get the recording data to the CPE. The CPE may be turned off or otherwise unavailable when the ARR data is generated. According to the invention, the ARR data is, after generation, made available in a message box in the server node, and is transmitted to the CPE on request of the CPE. Thus, at a moment chosen by the CPE (for example regularly during operation and just after turning on), the CPE checks the message box in the server node for new ARR data and retrieves it if new data is found.

In an embodiment of the invention, the server node further comprises a recording generation scheduler, wherein
- the recording generation scheduler at regular intervals causes the Recommendation Engine to generate recording recommendation data for a user.
In this manner, for each profile an automatic update of the recording recommendations may be made, irrespective of whether the CPE device associated with that profile is turned on. It also allows the system to scale gracefully - if demand is high, i.e. there are many users with a profile, the frequency of automatic updates of the re recording recommendations may be lowered in order to reduce the work load of the server node. In known systems, where the updates are calculated on demand from the CPE, such advantageous lowering of the workload is not possible.

In an embodiment of the invention, the server node further comprises an Audience Measurement System (AMS) Proxy, said proxy being arranged to supply statistical information about viewer preferences as input for the Recommendations Engine.
The AMS Proxy advantageously allows the Recommendation Engine algorithms to utilize viewing and recording information from a group of users. The AMS proxy provides usage and behaviour information of individual users. The recommendations engine can map individual usage actions using the profile id to individual users. From the usage and behaviour information, the Recommendation Engine can provide personalized recommendations.

In an embodiment of the invention, the server node further comprises a Content Metadata Discovery Component (CMDC). The CMDC receives complex requests e.g search and query from the CPE and breaks them down into requests to the appropriate back-end service(s). The responses are aggregated before being returned to the CPE application. The CMDC supports request to return metadata for various items, such as scheduled TV programs, Video on Demand programs, provider products, subscriptions, services, promotions, etc.

The invention further provides a method for searching multiple sources, such as a server node, a user's local network, the internet, and/or a CPE, and then collecting and aggregated the search results for display to the user. In particular, the invention further provides a method for obtaining and presenting keywords search results in a Consumer Premises Equipment (CPE), the method comprising
- sending a request comprising the keywords to a search proxy device having any of the features as described above,
- receiving results from the search proxy device,
- searching content, in particular video or audio content, on a local network using the keywords,
- combining the search proxy device results and the local content search results in a single search result list and presenting said list.

The user can thus with a single search instruction, search multiple databases on various networks, for example using a search proxy device as described above.

Separate search results may be transmitted to the CPE and aggregated in the CPE. It is also possible that the CPE performs additional searches locally and integrates the results of those searches with the results obtained from the server node.

In an embodiment, the method also comprises performing an internet search from the CPE. Internet searches, either from the CPE or the server node, can be performed in various ways, e.g. though an intermediary site (for example, a trusted aggregator or dedicated search site), specialised websites (for example, a movie database website) or using general purpose internet search engines.

According to a fifth aspect of the invention, the search results may be aggregated in a server node and transmitted to the CPE as an integrated list. In an embodiment, the method also comprises searching an EPG or a VOD catalogue, for example from the server node. The search can comprise searching content recorded on the CPE.

Search results may be presented in a manner that discloses the (type of) database, or source, where the search results were obtained. The search results can be filtered by criteria such as source and price. Advanced search input parameters allow the user to search within category information such as genres, subgenres, channels, events on specific days or parts of days, video formats and keywords. Results can also be sorted in various ways.

In an embodiment, a recommendations engine, such as a recommendation engine as discussed above, will provide a related recommendation for search results. For example, depending on content found on the CPE or a local network, the recommendation engine may recommend similar content, for example similar content that is available from the EPG or VOD catalogue. The recommendation is for example based on any one or more of the user's previous consumption, usage behaviour, profile, demographics, etc.

By using a recommendations engine to generate additional search results, possibly results not exactly matching the user's search keywords, the user may advantageously be provided with more relevant results than would be obtained using the keyword search results only.
In an embodiment, a server database of applications or "widgets" is searched. For example, a search for "weather" data may return as a result a link to a application showing the current weather forecast. The applications may be server-side (for example processes running on the server and transmitting results to be displayed to the CPE) or client-side (for example processes running on the CPE processor).

In an embodiment, the CPE is arranged to transmit information related to content on the user's home network to the head end. Effectively, the available assets on the home network will be identified, and information about the assets will be received in a head end module, typically called a personal planer server. Said assets may then be enriched by searching enhanced metadata, such as text and pictures, related to the assets. This may be done via website proxy in the head end. Said enhanced metadata and the information on the assets of the home network is stored in a head end database, typically called a two-way catalog. The search and recommendation functionality described in this application may be enabled for the asset related data stored in the two-way catalog.

### Short description of the figures

The invention will be explained in detail with reference to some drawings that are only intended to show embodiments of the invention and not to limit the scope. The scope of the invention is defined in the annexed claims and by its technical equivalents.

On the attached drawing sheets,
- figure 1 shows a schematic view of an architecture according a first and second aspect of the invention;
- figure 2 schematically shows a method according to a first aspect of the invention;
- figure 3 schematically shows a method according to a second aspect of the invention;
- figure 4 shows a schematic view of an architecture according a first and second aspect of the invention;
- figure 5 schematically shows a caching method according the invention;
- figures 6a-6b schematically shows a cache fill-in method according the invention;
- figure 7 schematically shows an architecture according a third aspect of the invention;
- figure 8 schematically shows a further architecture according a third aspect of the invention;
- figure 9 schematically illustrates a fourth aspect of the invention;
- figure 10 schematically illustrates an architecture according a fifth aspect of the invention;
- figure 11 schematically shows data flows according a fifth aspect of the invention;
- figure 12 schematically shows data flows according a fifth aspect of the invention;

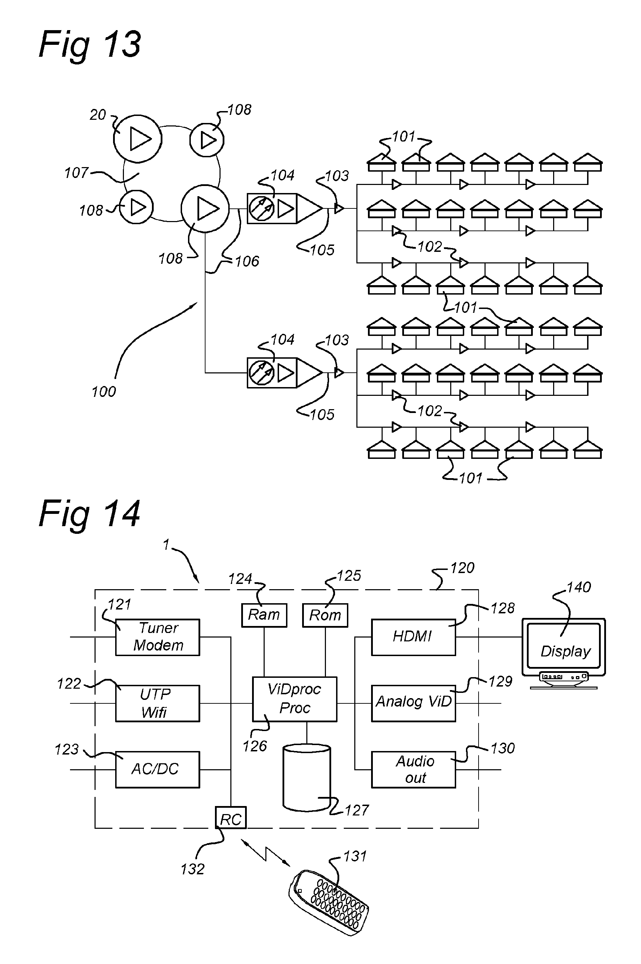

- figure 13 schematically shows an overview of a cable network that can be used in combination with any aspect of the invention;
- figure 14 schematically shows a Consumer Premises Equipment (CPE) that can be used in combination with any aspect of the invention, as well as a third party device;

### Detailed description of exemplary embodiments

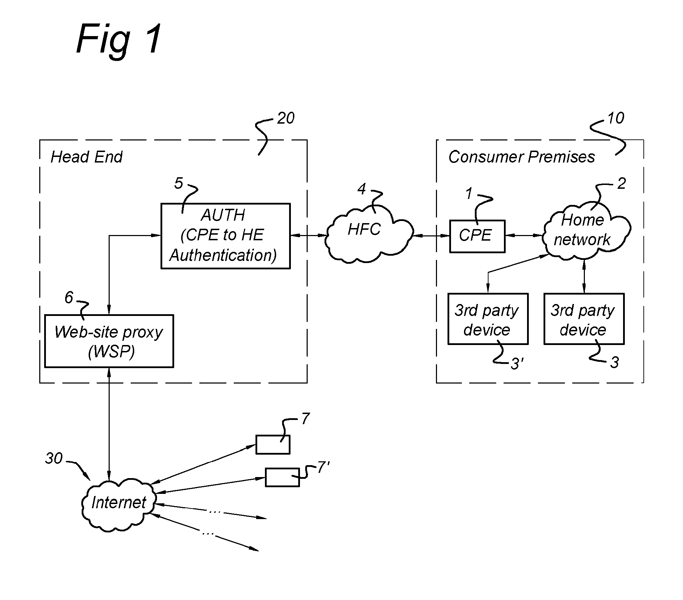

Figure 1 shows a schematic overview of an architecture according to aspects of the invention. Consumer Premises environment 10, for example a home or household and its immediate surroundings, comprises a number of networked consumer electronics devices 1, 3, 3' and a network 2. Note that the invention is not necessarily limited to a home environment, and may be practised in an office environment, educational facility, etc.

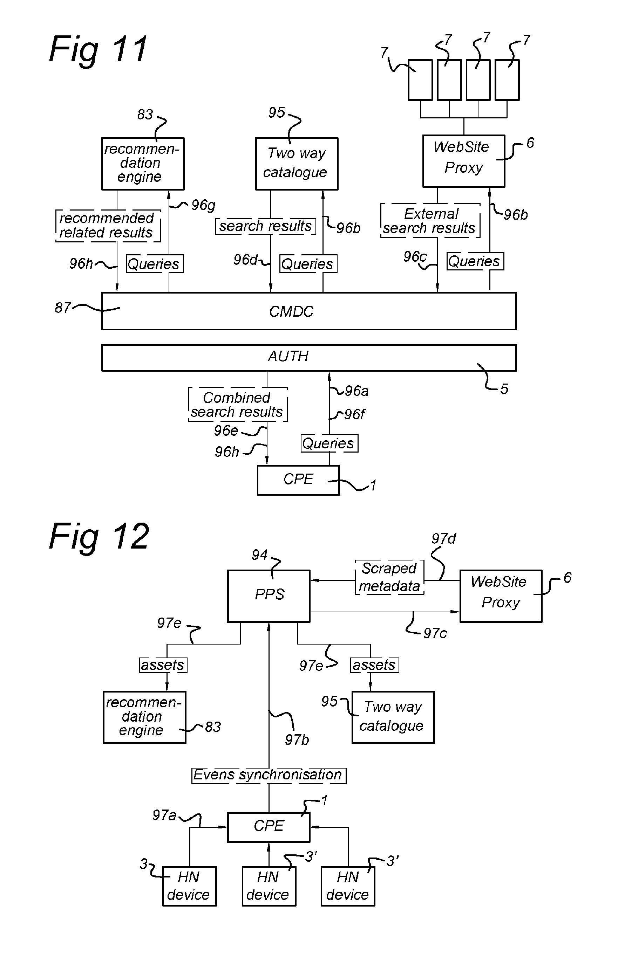

Consumer Premises Equipment (CPE) 1, for example a Set-top-Box (STB), is connected to home network 2 as well as to Hybrid fibre-coaxial (HFC) network 4. Elements of an exemplary CPE 1 are elucidated in more detail in reference to figure 11. Home network 2 may be a wired or wireless network, for example a wired Ethernet LAN or a wireless LAN (Wifi), according to any of the IEEE 802.11 variants. Preferably the TCP/IP protocol is used in the network and associated routers, gateways, etc. Third party devices 3, 3' can be for example, PC's, laptops, game computers, mobile phones, tablet computers, personal digital assistants (PDAs), Blu-ray players, photo or video cameras, or any other type of networked electronics equipment, preferably consumer electronics equipment having access to a storage for digital media. Examples of digital media are video material (movies), for example in a standardised format such as MPEG-2, MPEG-4, H.264, etc, audio material, for example in a standardised format such as Mpeg layer 3 (MP3), AAC, FLAC, etc, photo material, digital documents, drawings, etc.

CPE 1 and devices 3, 3' are connected to each other via network 2. CPE 1 and devices 3, 3' are configured in such a manner that CPE 1 has at least read access to at least a part of the information stored in or devices 3, 3'. Examples of CPE accessible storage in devices 3, 3' are internal and external ROM or RAM, EEPROM, flash memory, hard-disk devices, connected USB sticks or disk devices, inserted optical media, etc.

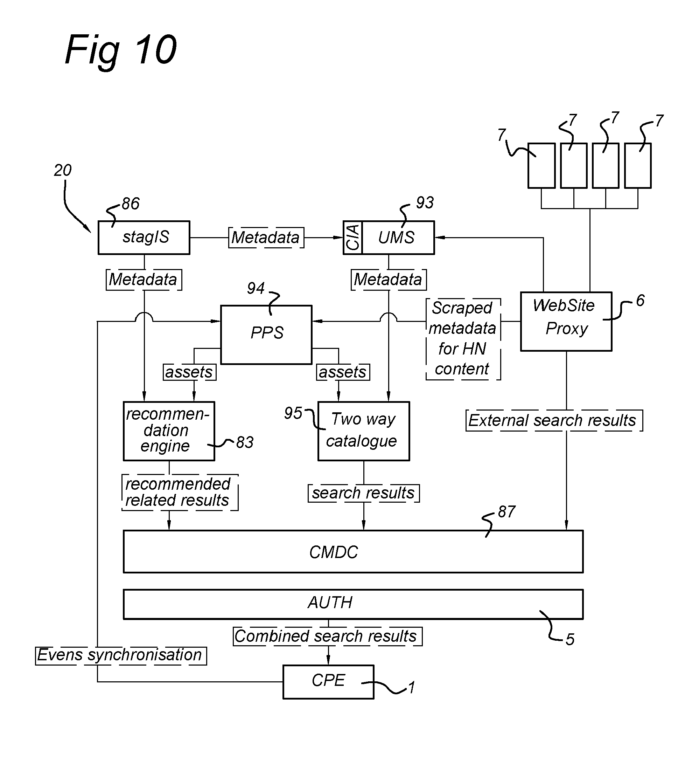

CPE 1 is connected via Hybrid fibre-coaxial (HFC) network 4 to head end environment 20. Instead of a HFC network, another type of network can also be used, such as for example an ADSL network with TCP/IP protocol stack or a wireless 3G network. Connected to the network 4 is head end environment 20, which can communicate bi-directionally with CPE 1 via network 4. The term head end suggests that the invention may be advantageously practised using a known cable network infrastructure, such as is explained in reference to figure 10. However, the invention is not limited to such an infrastructure, and may be practised in a different context. In a different context, head end environment 20 may for example be a server or server cluster, generally indicated as server node, having essentially the same functionality as disclosed below in connection with the head end environment.

The head end (HE) 20 comprises an authorisation module 5, arranged to authenticate incoming traffic over network 4 as originating from CPE 1. The module 5 is further arranged to authorise requests from CPE 1, for example, the module 5 may perform checks to see if CPE 1 device is linked to a valid cable subscription. Connected to authorisation module 5 is Website Proxy (WSP) device 6. The WSP 6 is in turn connected to the internet via known networking devices. On the internet, a number of trusted or partner websites 7, 7' is present. The WSP has contact details of the trusted websites 7, 7'. In an alternative example, the internet is replaced by a local (private) network, and the trusted websites are general content servers connected to said (private) network.

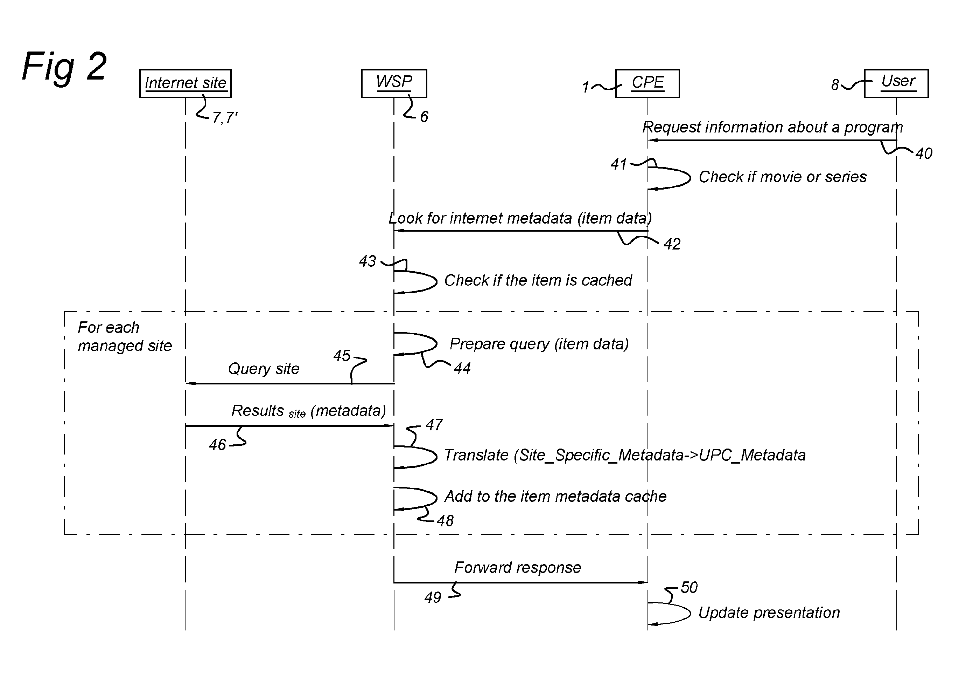

An exemplary method according to a first aspect of the invention will now be explained in reference to figure 2.

Figure 2 schematically shows a number of functional actions between a CPE 1, WSP 6, and Internet sites 7,7', initiated by a user 8 of CPE 1.

In action 40, the user uses the user interface (UI), for example by manipulating a remote control 131 shown in figure 11, of the CPE 1 to request information about a program, in particular about a program that is available through the CPE. This program may for example be a broadcast program of which the user sees an announcement in the CPE delivered Electronic Program Guide (EPG). It may also be Video On Demand (VOD) content made available through the CPE, for example in an electronic catalogue or menu that is available via the Ul of the CPE 1. The user may request more information about a specific aspect of the program, in particular about specific metadata associated with the program. Metadata may be the title, director, an actor or actress name, etc.

In action 41, the CPE 1 analyzes the type of content for which the user requests information. The CPE may check if the type of content selected is supported by the enhanced metadata functionality. For example the CPE 1 may check if the user selection is a movie or TV series.

If the selected content is supported, in action 42, the CPE 1 requests the WSP 6 to look for internet metadata related to the selected content or metadata. This request is done through the network 4, and implies that the CPE 1 is authorised by authorisation module 5. The request may be prepared by the CPE 1. For example, the CPE 1 may consult the EPG entry or VOD catalogue for the selected program, as received earlier, and use all or selected metadata fields associated with said entry in the request to the WSP 6. Examples of certain metadata fields are name of the movie or series, year of production, season (if TV series), names of actors or director, genre, language, etc. In an advantageous embodiment, the user can use the user interface to specify which kind of metadata he is most interested in, e.g. plot outline, actor biography, critics rating, etc. In an alternative embodiment, the CPE 1 only sends essential data regarding the selection (such as timeslot and channel in case of TV program or a reference number in case of VOD or EPG options) and any user preference data to the WSP 6, and leaves the selection of metadata fields to the WSP 6.

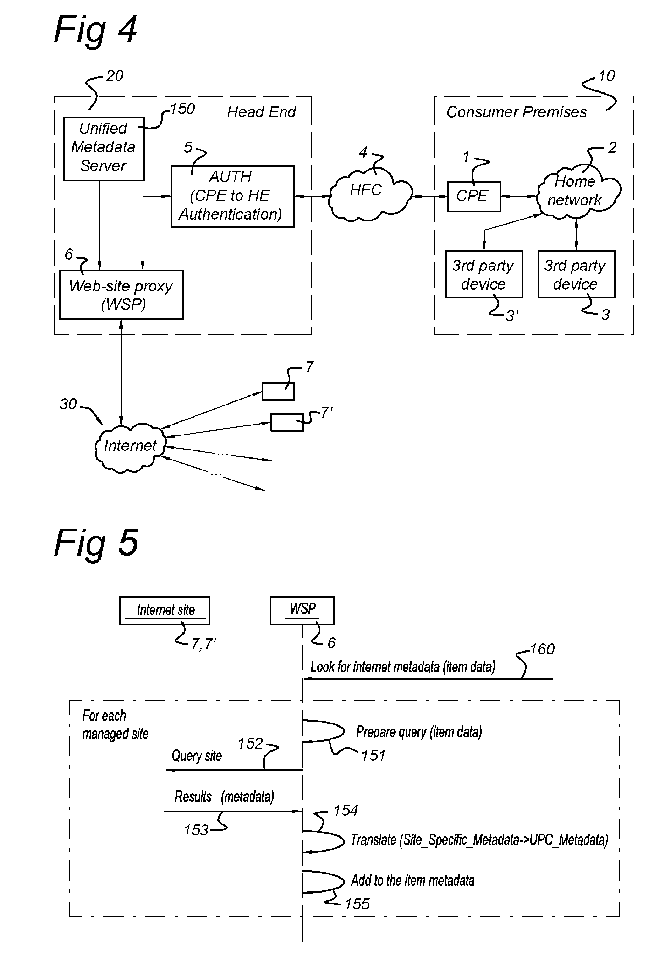

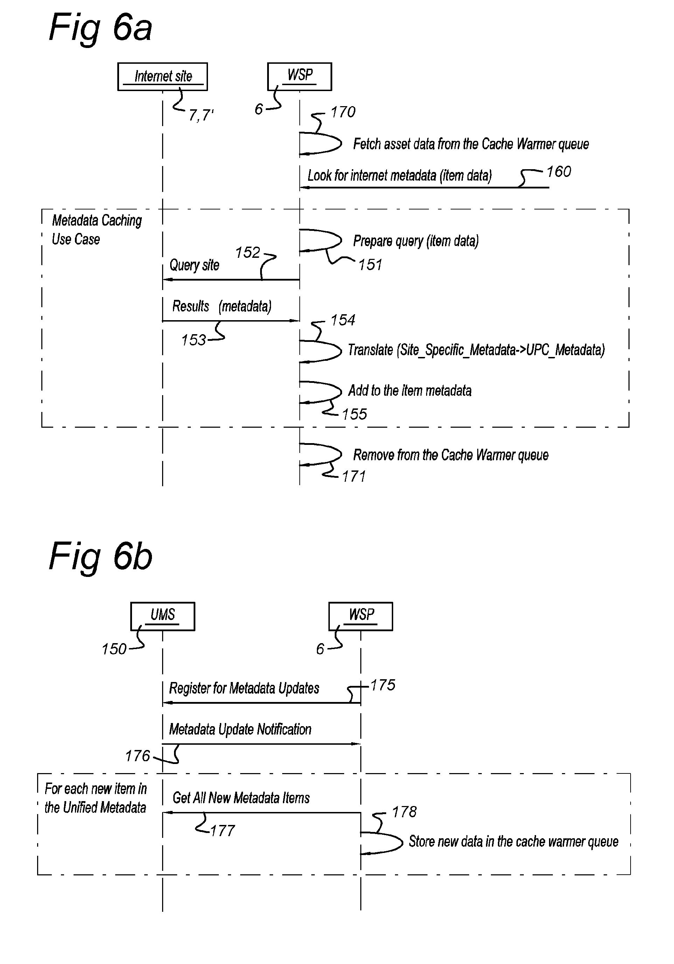

In action 43, WSP 6 will first check if a local cache storage, which storage stores results from past internet searches along with details of the associated query, already has a search result corresponding to the same content for which information is currently being requested. If so, in possible dependence on the age of the stored result and the fields of the query, the WSP 6 may decide to return a copy of the stored results to the CPE 1. In that case, the next action will be action 49. More exemplary details about cache storage behaviour are discussed in reference to figures 5 and 6a-6b.

In action 44, for each of the partner sites a dedicated internet search query is prepared based on the metadata fields of the request. WSP 6 converts the request to the query format relevant to the site. WSP 6 implements adaptors for individual internet sites that follows to respective APIs (Application Program Interfaces). For example, pre-configured digital forms, pre-configured for particular partner sites, may be filled in by WSP 6. In action 45, the prepared dedicated queries are submitted to the one or more partner sites 7, 7'. Preferably these are trusted partner sites, which pre-arranged interfaces for internet queries. For example, specific username / password combinations, search page URL's, connection ports, etc may be used in the queries.

In action 46, search results from each partner site 7, 7' are received. In a preferred embodiment, a time-out is used to avoid waiting indefinitely for a downed or otherwise unresponsive server. A warning message may be automatically dispatched by WSP 6 to a service point of the provider in case a server is unresponsive, so that the provider can take measures to restore functionality.

In action 47, the received search results are translated to a pre-determined enhanced metadata response format. Preferably, these translations are robust, so that in case of unexpected results (for example, due to an unforeseen change in the response structure from the server) the response is discarded as unusable. Selected enhanced metadata in the pre-determined format is attached to the selected content request result. WSP 6 may be arranged to select the best returned result in case multiple results in the same category are returned. WSP 6 may be arranged to discard the not selected results. Selections can be made based on various aspects, for example for an image the resolution may be a selection criterion. In case of textual information, the language can be a criterion or the number of words. The request result data, preferably after categorizing and selecting, is preferably stored, along with the original request, in a cache storage of WSP 6.

In action 49, the thus determined request result is transmitted to the CPE 1 over network 4. Preferably, the result is in a pre-determined format, such as an XML format with predetermined tags. However, any other known suitable format may be used instead.

In action 50, the CPE 1, in particular the UI of the CPE 1, updates the presentation of information, so that the user 8 can view the enhanced metadata results, for example on display 140 connected to the CPE 1 of figure 11.

The enhanced metadata thus obtained and presented to the user 8 can be textual (for example, plot outlines, reviews, production details, etc), statistical (average ratings, number of voters, etc), but it can also comprise multi-media data, for example a trailer video, audio or video interviews with actors and directors, etc. The enhanced metadata may comprises references to further data, such as links to trailers. In a particular example, the metadata may comprise critics rating, number of voters for critics rating, users rating, number of voters for users rating.

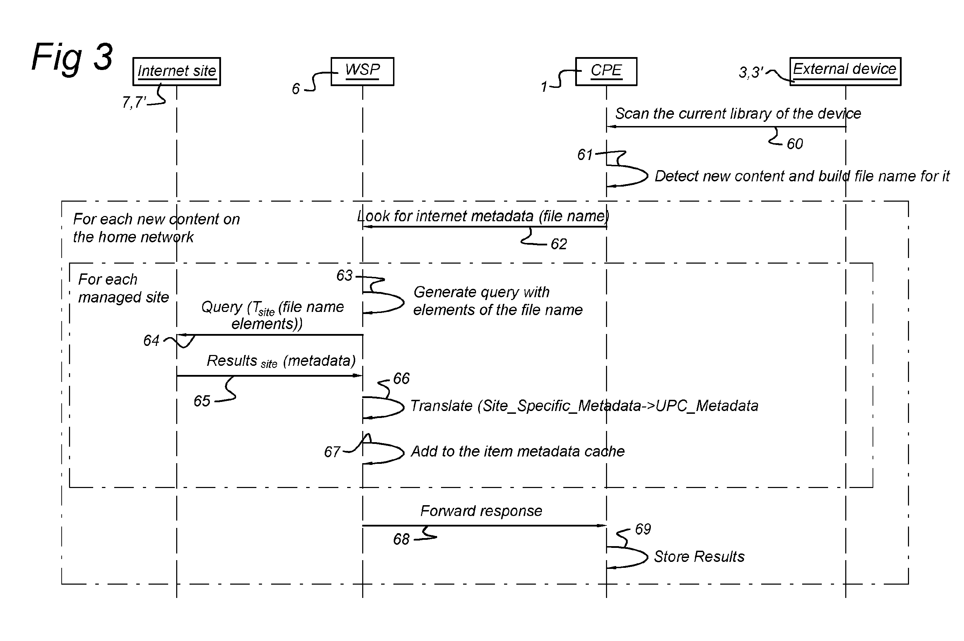

Figure 3 schematically shows a method according to a second aspect of the invention. The CPE 1 is connected to one or more external, 3rd party devices 3, 3'. The CPE 1 regularly, in action 60, scans the content, in particular the media content, stored on or accessible to these devices 3, 3'. Based on the results of the scan, in action 61 the CPE 1 determines if new content has appeared on a device 3, 3'. If so, the CPE 1 will formulate a request for enhanced metadata, using metadata available to it. An example of metadata that is generally available is a file name of content on a third party device 3, 3'.

Advantageously, the CPE 1 may parse the filename to obtain the type of data (using the common 3-letter extension), the title, the artist or author, etc. The file name parser may make use of the fact that fields in a file name are usually separated by a separating sign like an underscore, space or period. The file name parser may make intelligent guesses as to the type of data that such a field represent (i.e. a 4 digit number starting with 19 or 20 is usually the year of release of a media work). A part of the intelligent parsing may be done at a later stage of the method, preferably in WSK 6 of head end 20, where a large database can be used for cross referencing fields, so that a string of text in a file name can be, with a high confidence value, identified as the title of a work, or the author name, artist name, etc.

Also, use may be made of available metadata fields inside a file on a third party device, for example the content of the fields artist name, album name, etc in an MP3, or date fields or GPS coordinates in a JPEG file.

Based on the available metadata, a request to WSP 6 is formulated and transmitted in action 62. WSP 6 will use the data in the request to generate search queries for relevant partner sites, similar to action 44 as described in reference to figure 2. For each of the partner sites, in action 64 (similar to action 45) a query is submitted. In action 65, similar to action 46, the results are received, which are translated to a preformatted response format in action 66 (similar to action 47). As described before, a selection may be made in case multiple results are returned.

In action 67, the obtained results are added to the item metadata (similar to action 48) by WSP 6, and are preferably stored in a local cache storage associated with WSP 6. In action 68, similar to action 49, the search results are transmitted, in a unified internal format such as a pre-determined XML format, to the CPE 1, where the results are stored for later presentation to the user 8.

Advantageously, the exemplary method described in reference to figure 2 and the exemplary method described in reference to figure 3 may be made available from a CPE having a User Interface (UI), which has a uniform look and feel for both methods. The UI thus allows enhancing content available from the Head End (Video on Demand, scheduled broadcasts, EPG data) and from a local network, using a single User Interface experience.

The methods may further allow the user or an operator to select or remove partner websites. The metadata found by the dedicated queries by WSP 6 may be stored in received form in the head end, in particular in a storage accessible to the WSP 6. The translated search results may be stored in that storage as well. They may additionally be stored at the CPE 1.

The following metadata types may be handled by the system: title, synopsis, box art, release year, actors list, director. For example, a request for enhancement for a specific media item (from the head end or the local network) may return enhanced metadata relating to any or all of the above metadata types.

Figure 4 shows a schematic overview of a variant architecture according to aspects of the invention. Figure 4 is similar to figure 1, the architecture having like components, however a Unified Metadata Server (UMS) 150 has been added to the head end part of the architecture, the UMS 150 being connected to the WSP 6. The Unified Metadata Server 150 plays a role in the functioning of the Website Proxy 6, as will be explained in reference to figures 5 and 6a-6b. It should be noted that the UMS 150 functionality could also be integrated in the WSP 6 component.

Figure 5 schematically shows a method of obtaining and caching Internet metadata for future use by the WSP 6. The metadata is stored in the WSP 6 cache and used to provide faster response to CPE's metadata queries (see for example action 43 in figure 2). The WSP 6 performs caching of information that either was requested by CPE 1 and wasn't in the WSP 6 cache (in many cases this will happen when the content of an external device 3, 3' is scanned by the CPE 1, see action 60 in figure 3) or a new TV schedule and/or on demand content has become available in the Head-End, so it is expected that a user will ask for extended metadata relating to this new scheduled programming or new content to be presented.

In action 160, a user or CPE 1 requests to present information about an asset. An "asset" in this context means a TV program (for example from the EPG), a video on demand item, or content available from an external device 3, 3', or generally a media object. The WSP 6 now stores a list of assets that it has to find metadata for. Once the enhanced metadata related to the assets has become available, the information in WSP 6 cache has be updated. The request to obtain said enhanced metadata is initiated and the following actions are performed for each (Internet) site 7, 7' that WSP 6 is configured to work with.

In action 151, the WSP 6 converts the request to the query format relevant to the site 7. 7' concerned. In action 152, the WSP 6 sends the query to the (Internet) site 7, 7', and in action 153 said site returns the query results to WSP 6. The WSP 6 translates the site specific results into a dedicated metadata format in action 154, and adds them to the WSP 6 cache in step 155.

The next time that a CPE 1 requests, action 160, enhanced metadata for the same asset, the WSP 6 can retrieve the stored result from the WSP 6 cache and return said result to the CPE 1, without going through the actions 151-155.

Figure 6a schematically shows a method of obtaining and caching Internet metadata for future use by the WSP 6. To provide fast response to the CPE 1 requests for enhanced metadata, the WSP 6 maintains a list of assets that it expects that a CPE 1 will request information for. The list, also called a cache warming list, is filled in when the Head End updates its schedule and on demand contents, so that new assets become available to the users. Assets may thus already be added to the list before the first user or CPE 1 actually requests metadata related to said assets.

In addition, some information stored in the WSP 6 cache, like rating information, has a limited life span and needs to be updated on a regular basis. Therefore, these assets are periodically added by WSP 6 to the cache warming list, in order to trigger an update of the cached information. The WSP 6 manages a background process of cache warming when it queries internet sites 7, 7' for the information to fill or update its cache. Advantageously, "real" requests for metadata from CPE 1 users are treated with priority. When demand is low, assets from the cache warming lists may be searched.

In action 170, the WSP 6 selects an item in the cache warming queue or looks for an asset in its cache that has to be refreshed. Then WSP 6 self-initiates a request for enhanced metadata (similar to the request 160 from a CPE 1) based on the next item in the cache warming list. Actions 151, 152, 153, 154 and 155 are similar to those discussed in reference to figure 5. After these actions have completed successfully, the asset can be removed from the cache warming list in action 171.

Figure 6b schematically shows further exemplary details relating to the cache warming list or queue. The cache warming list or queue is a queue of assets for whom WSP 6 has to find enhanced metadata. As described in reference to figure 6a, the list can be used to fill in the WSP's cache in anticipation of requests for metadata by users.

In action 175, WSP 6 registers with one or more Unified Metadata Servers (UMS) 150 for information update notifications. In step 176, when new scheduled or on demand asset data is ingested (becomes available) in the Head End, WSP 6 receives notification from a UMS 150. For each new item, in action 177 asset data is retrieved from the UMS 150 by the WSP 6. Each received asset is added to the cache warming list of the WSP 6 in action 178.

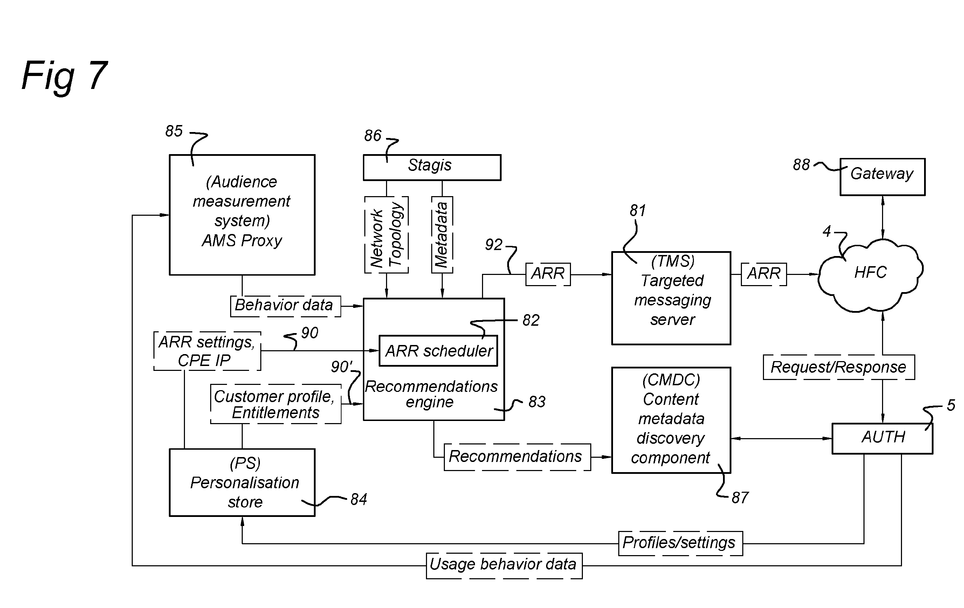

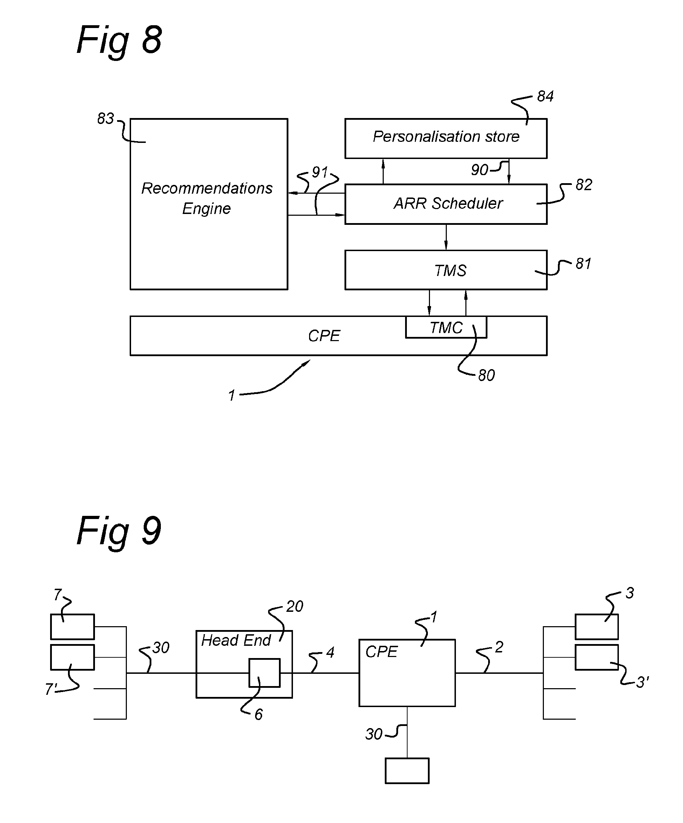

Figures 7 and 8 schematically show an architecture related to a third aspect of the invention. CPE 1 in figure 8, indicated with the more general term Gateway 88 in figure 7, has a Targeted Messaging Client (TMC) module 80, which communicates via network 4 with a Targeted Messaging Server (TMS) 81. TMS 81 is connected via an internal network of head end 20 to a Recommendations Engine (RE) 83, which comprises an Automatic Recommended Recordings (ARR) scheduler 82. The ARR scheduler 82 in turn is connected via a head end 20 network to a Personalisation Store (PS) 84, an Audience Measurement System (AMS) proxy 85, Stagis module 86, and Content Metadata Discovery Component (CMDC) 87. AMS proxy 85, PS 84, and CMDC 87 are also connected to authorisation module 5. The CMDC 87 functions in a similar fashion as the website proxy (WSP) 6 and Unified Metadata Server 150, that have been previously discussed e.g. in reference figure 4

The interconnections of the various modules have the following functions. The ARR scheduler 82 is arranged to query PS 84 regularly, for example daily, to retrieve ARR settings for one or more profiles belonging to (members of) a household where a CPE 1 is installed using connection interfaces 90, 90'. The connection interface 90 also allows the ARR scheduler 82 to get device information, such as a network address, for said CPE 1.

Using connection interface 91 (see figure 8) the ARR scheduler 82 obtains the required number of recommendations for each profile from the recommendations engine 83.

The obtained recommendations can be sent to the appropriate CPE 1 (this data was obtained via interface 90) via the connection 92 to the TMS 81. The TMS 81 can then deliver the ARR data, or "bookings data", to the CPE 1.

The Stagis module 86 is arranged to import various listings from various provides, e.g. VOD catalogue data, EPG data, product data, channel data, etc. It makes this data available to, among others, the Recommendation Engine 83.

The system of figures 7 and 8 thus allows the creation of automatic recommended recordings (ARR), for programs to be automatically recorded by CPE 1. The user can select programs to be recorded, but the system according to the invention can also submit automatic recommended recordings (ARR) data, or, for short, automatic bookings, to CPE 1 for recording. Preferably CPE 1 device is arranged so that in case of a conflict, i.e. two or more overlapping bookings that cannot all be recorded, the user selected booking has preference over the automatic booking. An exemplary manner in which the ARR bookings can be determined and sent to the household device (CPE) will now be discussed.

The ARR scheduler (ARRS) 82 is arranged to perform periodic generation of automatic recommended recording data for all profiles in the system. A profile is persistent data relating to a user of a CPE 1. A CPE 1 in a household may have multiple users, and thus multiple personal profiles may be present in the Personalisation Store (PS) 84 serving the CPE. ARRS 82 sends a "Get Profiles for Automatic Recording" request to PS 84 via interface 90'.

In response, PS 84 generates a list of profiles for processing, and sends the list to ARRS 82.

ARRS 82 queries the recommendations engine for ARRs. The number of ARR bookings requested may be a user configurable parameter, with a sensible default value assigned by the system.

It is a goal of the Recommendations Engine (RE) 83 to estimate, based on any available data, which programs a user might want to record. The Recommendation Engine 83 is in the current example advantageously located in the head end, so that potentially data relating to other users may be used in the recommendations algorithms used by the RE 83. The effect of an Automatic Recording Recommendation (ARR) generated by the Recommendations Engine 83 is to automatically record the recommended items on the CPE for the individual profile. The recommendations engine has all the learning about a profile form the PS and AMS and it generates the ARRs based on the usage and behaviour learning about a profile. The recommendations are thus done on the basis of the available metadata, and/or the output of the Audience Measurement System (AMS) 85 and/or profile date (in the Personalization Store 84).

The AMS 85 collects user preference data from users connected to the head end. It receives Audience Measurements Reports about usages from individual users from CPE's, and converts these reports for further processing, for example form binary format to XML format. It forwards the processed reports to the Recommendation In a further embodiment, the data in the AMS 85 can also be mined to find input for the RE. For example, if the datamining reveals that 90% of people who record TV program X also record TV program Y, and the profile data for which currently ARR are defined reveals that program X is regularly recorded, then it is likely that program Y will also be appreciated by the user behind the profile. This is merely one example of a way ARR bookings can be derived from AMS 85 data. The skilled person will be able to define more examples. Thus, it is generally possible to use data about a group of users as input for the RE, which is an advantageous property of locating the RE outside the client device and in the head end.

The profile data itself is also a source of RE input. For example, if a user has repeatedly recorded an episode of a TV show Z, it is likely he will want to record future episodes. It is thus possible to have the recommendations done per personal profile of the user. In absence of a personal profile the household profile can be chosen as basis for the recommendation. In case of the use of a personal profile the corresponding user may have to identify himself when he is watching the programs, so that his watching behavior can be determined by the AMS.

The user 8 whose ARR data is being determined, can also have provided a number of key words as input (using a dedicated part of the User Interface of CPE 1) for the RE. These key words can be used as input for the RE algorithm. For example, they may be matched against EPG metadata of a program, with more matches increasing the likelihood that the user wants to record a given program.

So, instead of requiring the user to scan the program guide each day and making a manual selection of programs for that day, the user may submit general metadata, in particular keywords, to the Recommendation Engine once, which will be used as input in the ARR bookings until such keywords are changed. The user thus advantageously needs to spend less time instructing the system about his preferential programs.

More advanced examples include use of further information about the user. He may have for example, made the location of his website or personal page on a social website available to the system, so that the RE may determine input from said website pages. The user may direct the RE to other sources readily available, such as for example a user's or someone else's Twitter messages or messages from other messaging services. In an particular example, a user could send a twitter message about a program or event of interest, and the Recommendation Engine may pick this up and schedule automatic bookings for TV programs related to the event or for the program itself.

The ARR booking data thus prepared, the RE 83 sends the data to the ARRS 82.

ARRS 82 now queries the PS 84 for the CPE data corresponding to each profile. In response, the PS 84 returns the CPE device data for each profile. This contains for example IP address, CPE ID, and port number of the CPE 1.

ARRS 82 sends ARR booking data requests to TMS 81 for each profile. The request contains information necessary to contact the CPE and information relating to the targeted profile. The payload of the request is a binary encoded version of the list of recommendations sent to the TMS.

TMS 81 stores the ARR booking and makes it retrievable by the household CPEs for the configured storage period.

The CPE may not be turned on at the time that the ARR booking is first made available at the TMS 81. In case the CPE wakes up from a (cold) standby mode, the CPE, in particular the TMC 80, checks with its TMS 81 whether a message is available. In case the "mail box "of the TMS includes a message that a booking is available this booking is picked up. This method has the advantage that bookings generated by the head during the (cold) standby mode are not missed.

The CPE will check the nature of the booking. Not only ARR bookings will be sent to the CPE via the TMS 81 to TMC 80 link, also user selected bookings may be sent by the user to the head end via another route (for example, a website relating to the service, or an automated email responder, mobile phone application, etc), which bookings are then also transmitted from the head end 20 to the CPE 1 via the TMS 81 and TMC 80. If the nature is ARR, the CPE will generally drop the ARR in case it conflicts with a user selected recording.

An overview of the recordings can be made visible per profile and keyword (in case of use of the ARR) using the User Interface of the CPE 1.

According to a fourth aspect of the invention, schematically illustrated in figure 9 which introduces no new numerals, the system of head end 20 and CPE 1 are arranged to perform an integrated search across head end data, internet data, and home device and network data. For example, a user may enter keywords related to a query using the User Interface of the CPE 1. The CPE will forward the query to the WSP 6, which will prepare and transmit follow-up queries to the partner sites and collect the responses, as described in reference to actions 43-48. The returned response is added by the CPE to its the additional search results.

In addition, the head end 20 may be arranged to search its own catalogue of services (eg EPG entries, Video on Demand catalogue, etc) for matches against the keywords. For example, a VOD catalogue entry may match the search keywords. The entry is also send back to the CPE as a search result.

Before or after submitting the query to the head end 20 or WSP 6, the CPE 1 has started its own localized search. By actively scanning external devices 3, 3' on the local or home network 2, or by consulting stored results from previous scans of said devices, the CPE matches the keywords against metadata related to the content stored on these devices. The matching process may comprise intelligent file name parsing as explained previously. It may comprise other types of searches, e.g. text string searches in text documents. Use may be made of search or catalogue facilities available on the external devices 3, 3'.

In addition to the local scan, the CPE 1 may consult selected servers on the internet with the search keywords.

The search results from the head end, the local search, and the internet search are collected by the CPE and presented to the user as a single list or as separate lists. Preferably, the results are ranked according to relevance. Preferably, the type and nature of the search results are clearly indicated. For example, if the search keywords formed a movie title, the search results shown preferably show the availability of the movie via VOD, the next time the movie will be broadcast, relevant metadata returned by the WSP 6 queries, and local data relating to the movie.

Thus, search for content is done on the head end side in the data available the head end, on the internet by the website proxy, present in the head end, on the data available on the partner sites. The search on the personal data in the CPE is done in the CPE, as is an optional further internet search. The results of all searches are combined in the CPE.

According to a fifth aspect of the invention, the one or more of the searches may be performed by the head end 20 and the search results may be aggregated in the head end 20 before being transmitted as an integrated list to the CPE 1. Figure 10 schematically illustrates an architecture according a fifth aspect of the invention. The StagIS module 86 maintains metadata related to head end content (e.g. VOD or broadcast programs, EPG assets). It distributes the metadata in a predefined format to all head end components that require metadata. The Catalogue Import Adapter (CIA) attached to UMS 93 is a component which takes the metadata in the predefined format from Stag IS 86 and reformats it to an internal format used by the head end 20. As before, the WSP 6 provides further enrichment of metadata of a dynamic nature and the Recommendation engine (RE) 83 provides personalised recommendations to users. To achieve this it needs rich metadata for all the content. The RE 83 also manipulates the metadata adding keywords and associations.

StagIS 86 is arranged to import rich metadata from an external metadata provider and to export the metadata to the UMS 93 (via CIA) and to the RE 83. The UMS 93 is arranged to further enrich its metadata with certain types of data from sources on the internet via the WSP 6. This data may be non-static, for example user ratings or similar.

The Personal Planer Server (PPS) 94 keeps a list of the home network content for each user and its scraped metadata. "Scraping" is a term commonly used in connection with systematic internet data retrieval. Scraped metadata may be metadata that has been retrieved from web sites and that has been processed to become structured metadata suitable for storage or further processing. The Website proxy (WSP) 6 provides scraped metadata for user home content via partner websites 7. The Two Way Catalogue (TWC) 95 provides search results for content in the head-end and also from content which is found on the users home network and recorded items on the CPE (see figure 12).

The head end 20 may have components such as disclosed in reference to figure 7. A recommendations engine 83 may be used to generated additional search results based by generating references to content related to search results. In doing so, the recommendation engine may make use of data from the personalisation store 84 as disclosed before.

In an embodiment, the Content Metadata Discovery Component 87 aggregates the search results and controls the RE 83 to generate additional search results.

The search results may be provided primarily from 3 sources:- a so-called two-way catalogue (TWC) 95, which provides search results for content in the head-end and also from content which is found on the users home network and recorded items on the CPE 1. Said content may comprise linear broadcasted events (for example based on EPG data), VOD catalogues, applications or widgets, recorded content on the user CPE 1, and home network content.
- Website Proxy (WSP) 6. The WSP may provide search results from 3rd party content providers 7 on the internet.
- Recommendations engine (RE) 83. The RE 83 provides personalized recommendations related to the search results. This process has two steps: Each search result will first be dissected for its context and associations, then the context and associations are used to acquire a recommendation.

Figure 11 schematically shows actions and data flows for performing a unified result. In action 96a, the CPE 1 will make the search request to the CMDC 87 (via the Auth component 5 which may be a component which handles authentication and security not related to search in general). In action 96b, The CMDC 87 will send out search requests to the TWC 95 and the WSP 6. The WSP 6 will send out the request to the selected internet sites 7. After receiving all responses (or a pre-determined time-out is met) the WSP returns all responses to the CMDC 87 (action 96c). In action 96d, the TWC returns the content results to the CMDC 87. The CMDC 87 receives the last updates (or a pre-determined timeout is met), combines the received results, and returns the combined results to the CPE 1 in action 96e. The CPE displays the results to the user. For each search result of the first page a recommendation is requested from the CMDC 87 in action 96f. In action 96g, The CMDC 87 requests a recommendation for each visible search result from the recommendation engine 83. The recommendation engine 83 returns the recommendations for each search result via the CMDC 87 to the CPE 1 in actions 96g and 96h.

Figure 12 schematically shows data flows relating to local network content and locally recorded content. In action 97a, the CPE 1 catalogues the content the user has on his home network (HN). The CPE 1 synchronises with the PPS 94, sending a list of content each user has available on in his HN, in action 97b. In action 97c, the PPS 94 sends the raw data (usually filename and possibly any attached metadata) to the WSP 6 for enrichment. The WSP sends the raw un-enriched data to web sites or to intermediate sites (for example an "enrichment partner"). An enrichment partner is a web service which, when queried, in turn goes to several 3rd party internet sources and tries to indentify and compile rich metadata (including text and pictures) for each piece of user content in the query. Using an internal algorithm the enrichment partner decides upon which returned answer is the correct one and scores it (in percentage) according to the likelihood it is a match or not. It then returns the metadata and the score to the WSP 6, which sends scraped metadata to the PPS in action 97d. The PPS 94 updates the TWC 95 and the RE 83 with the enriched metadata in action 97e.

To provide a better understanding of the invention, some optional aspects of the search functionality will now be discussed.

The search functionality user interface may be designed so that the user is able to search only for words which will generate a hit. For example, if the user enters the first two letters CA, the user interface may make the letter Z unavailable because it has no search results matching "CAZ". By reducing the choice of letters for the user, the user may enter the letters more quickly. The search functionality user interface may be designed so that for a keyword search there is a feature which shows the user possible automatically completed words which will generate a hit. For example: if the user has filled in "CAS" the words "Casablanca" and "Casper" etc will be shown to the user as possible completed search terms. This functionality may be implemented using a locally or remotely available database with search expressions that will generate a hit. If the search expressions relate to content available locally (in the home network 10) or on the head end 20, such database may be created and maintained locally or on the head end. If an internet server is used for the search, typically said internet server should make a database available in order to implement the functionality.

The search functionality user interface may be designed so that the user is presented with the most popular search terms at the moment. The most popular search terms may be maintained in the head end 10, possibly under editorial control of a head end operator, and sent to the CPE 1. The user interface may also shows the user the latest searches the user made and the most frequent search term used. The CPE 1 may store the last searches made by the user per profile.

The content catalogue of VOD suppliers could be integrated in the head end, so that the catalogue is readily available for searching and for the recommendations engine.

It will be clear to the skilled person that the example architectures presented in connection with the various aspects of the invention can be mixed or combined together according the invention. For example, the architecture discussed in reference to the fourth and fifth aspects can be used for either aspect. As another example, the architecture and data flows described in connection with the local network content search (figure 12) can also be advantageously used for the other aspects of the invention.

Figure 10 shows an exemplary Hybrid fibre-coaxial network 100. A number of households 101 are connected to the network 100 via coaxial cable 105. For a specific number of households or a certain distance traversed, a Line RF Amplifier 102 is provided on the coaxial part of the network 100. The signals to and from a number of households, typically 500 - 2000, are amplified by Trunk RF Amplifier 103 and come together in Optical Node 104.

The Optical Node 104 is also connected to optical fibre cabling 106. After typically 5-40 kilometres of optical cabling 106, a transport ring 107 is provided. The transport ring 107 has distribution hubs 108 and a head end 20.

A head end 20 usually has satellite dishes for reception of distant video signals as well as access to other data sources (e.g. for video on demand), and generally forms a server node. The head end may host servers related to services provided on the network, such as EPG.

HFC networks typically utilize frequency division multiplexing, to allow an HFC network to carry a variety of services such as analog and digital TV, VOD, telephony, TCP/IP, etc.

Figure 11 schematically shows an exemplary Consumer Premises Equipment 1 or Set Top Box device. The CPE 1 has a housing 120, comprising, on the input site, a cable tuner module 121, which preferably also serves as a cable modem, i.e. a digital network, in particular a TCP/IP network, is made available by tuner module 121. A traditional Ethernet module 122 is also provided. Preferably, also a Wifi adapter is provided as part of network module 122. Power is provided from an electric socket into the AC/DC power converter 123. There is also a remote control (RC) receiver 132, generally an infrared receiver. Externally, a corresponding Remote Control unit 131 is provided.

The CPE 1 has various storage facilities. There is working RAM 129, persistent memory (e.g. ROM, EEPROM, or Flash memory) 125,persistent bulk storage 127 (for example magnetic or optical disk, or flash memory). A central part is formed by the digital processor 126, which preferably has a graphics processor embedded or nearby. The processor is directly or indirectly connected to all input and output modules and storages. The processor 126 is also arranged to decompress and decrypt audio and video formats received by the CPE 1 for output through the output side of the CPE 1.

On the output side there is a HDMI video output module 128, analog video out (e.g. SCART) 129 and audio output 130. A display 140, for example a computer monitor or television set, is connected to HDMI output 128. Alternatively, a display device may be connected to the analog output 129 and/or the audio output 130.

The CPE 1 has generally an operating system and application software installed on it, for example on the memory 125 or bulk storage 127. The CPE software may be arranged to be automatically updated via the network, in particular via the HFC cable network. The CPE 1 may be arranged to communicate over the HFC network and/or a network available via the network module 122 with a head end server. The TMC (Targeted Messaging Client) functionality may be provided by the cable tuner 121 or the network module 122 in cooperation with the processor 126 and using program instructions stored in storage 125 or 127. The processor 125 and in particular an associated graphics processor may be arranged to display and update a Graphical User Interface (GUI) of the CPE 1.

In the foregoing description of the figures, the invention has been described with reference to specific embodiments thereof. It will, however, be evident that various modifications and changes may be made thereto without departing from the scope of the invention as summarized in the attached claims. For example, it may be advantageous to combine server node 20 modules, such as modules 86, 93, 94, 6, 83, 95, 87, 5, in a single server node 20 to provide a system according the invention, but the skilled person will understand that it is also possible to use any combination of the modules, having the described functionality, to obtain a system that is suitable for selected aspects of the invention.

In particular, combinations of specific features of various aspects of the invention may be made. An aspect of the invention may be further advantageously enhanced by adding a feature that was described in relation to another aspect of the invention. For example, the skilled person will realize that the described search proxy in the first and second aspects may be advantageously used in the integrated search according the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. Method for retrieving enhanced metadata relating to a media object, the method comprising, in a media content delivery network (4) with a Consumer Premises Equipment, CPE, (1) connected via said network to a server node (20) comprising a search proxy device (6), said search proxy device being connected to content servers on a further network (30), the method comprising:
- by the search proxy device (6), receiving (42, 62) a request for information about a media object from the CPE (1),
- by the search proxy device (6), forming (44, 63), on the basis of the request, at least one dedicated request for at least one selected content server, in particular a website, (7, 7') in a format suitable for said at least one selected content server,
- by the search proxy device (6), transmitting (45, 64) the at least one dedicated request to the at least one selected content server over said further network (30),
- by the search proxy device (6), receiving (46, 65) a response from said at least one selected content server comprising metadata related to the transmitted at least one dedicated request,
- by the search proxy device (6), translating (47, 66) the received response into metadata in a defined format, in particular a defined metadata description format,
- by said server node (20), transmitting (49, 68) a reply comprising said metadata in the defined format to the CPE (1).

2. Method according to claim 1, comprising:
- by the CPE (1), scanning (60) devices (3, 3') to which said CPE (1) is connected over a local network (4),
- by the CPE (1), deriving additional metadata (62) from scan results of said scanning,
- by the CPE (1), sending a request for information about a media object to the search proxy device (6), said media object being indicated by the additional metadata.

3. Method according to claim 2, wherein the additional metadata comprises a file name of a media file.

4. Method according to claim 3, wherein at least one of the CPE (1) and the search proxy device (6) derive further metadata for use in a dedicated request by parsing the file name.

5. Method according to any of the preceding claims, wherein the search proxy device (6) has a cache storage for storing metadata in a defined format, the method further comprising
- by the search proxy device (6), upon receiving (42, 62, 160) a request for information about a media object from the CPE (1), checking the cache storage for said information
- in case said information is found in the cache storage, transmitting (49, 68) a reply comprising said information to the CPE (1).

6. Method according to claim 5, the method further comprising
- by the search proxy device (6), retrieving (170) media object data from a cache list, said cache list being managed to store information about media objects becoming available in the server node (20),
- by the search proxy device (6), forming (44, 63, 151), on the basis of the media object data, at least one dedicated request related to said media object for at least one selected content server, in particular a website, (7, 7') in a format suitable for said at least one selected content server,
- by the search proxy device (6), transmitting (45, 64, 152) the at least one dedicated request to the at least one selected content server over the further network (30),
- by the search proxy device (6), receiving (46, 65, 153) a response from said at least one selected content server comprising metadata related to the transmitted at least one dedicated request,
- by the search proxy device (6), translating (47, 66, 154) the received response into metadata in a defined format, in particular a defined metadata description format,
- by the search proxy device (6), storing (155) said metadata in a defined format in the cache storage.

7. Method according to any of the preceding claims, comprising the action of checking the authorisation of the CPE (1) prior to forming the at least one dedicated search request.

8. Search proxy device (6) for retrieving enhanced metadata relating to a media object, the search proxy device (6) being connected with a Consumer Premises Equipment, CPE, (1) via a media content delivery network (4), said search proxy device being further connected to content servers on a further network (30), wherein the search proxy device is arranged to
- receive (42, 62) a request for information about a media object from the CPE (1),
- form (44, 63), on the basis of the request, at least one dedicated request for at least one selected content server, in particular a website, (7, 7') in a format suitable for said at least one selected content server,
- transmit (45, 64) the at least one dedicated request to the at least one selected content server over said further network (30),
- receive (46, 65) a response from said at least one selected content server comprising metadata related to the transmitted at least one dedicated request,
- translate (47, 66) the received response into metadata in a defined format, in particular a defined metadata description format,
- transmit (49, 68) a reply comprising said metadata in the defined format to the CPE.

9. System comprising the search proxy device (6) according to claim 8 and a Consumer Premises Equipment, CPE, (1), the CPE (1) being arranged to
- scan (60) devices (3, 3') to which the CPE (1) is connected over a local network (4),
- derive additional metadata (62) from scan results of said scanning,
- send a request for information about a media object to the search proxy device (6), said media object being indicated by the additional metadata.

10. Method for generating recording recommendation data, the method comprising, in a media content delivery network (4), with a Consumer Premises Equipment (CPE) (1) connected via said network to a server node (20) comprising a Recommendation Engine (83) for generating recording recommendation data, said Recommendation Engine (83) being connected to a Personalisation Store (84) for storage and retrieval of CPE users' profile data,
- generating recording recommendation data for a user in the Recommendation Engine (83) in dependence on a user's profile data from the Personalisation Store (84)
- preparing a message comprising the recommendation data
- sending said message to the CPE (1) over the network in response to a request of the CPE

11. Method according to claim 10, the server node (20) further comprising a recording generation scheduler (82), wherein
- the recording generation scheduler (82) at regular intervals causes the Recommendation Engine (84) to generate recording recommendation data for a user.

12. Method according to claim 10 or 11, the server node (20) further comprising an Audience Measurement System Proxy (85), said proxy being arranged to supply statistical information about viewer preferences as input for the Recommendations Engine (83).

13. Method for obtaining and presenting keywords search results in a Consumer Premises Equipment, CPE, (1), the method comprising
- sending (97b) information related to content available on the CPE and/or on a local network of the CPE to a catalog store (95) in a server node (20), the catalog store (95) storing said information;
- sending a request comprising the keywords to a search proxy device (6) according to claim 6,
- receiving (96c) matching search results from the search proxy device (6);
- sending (96b) the request comprising the keywords to the catalog store (95);
- receiving (96d) matching search results from the catalog store (95);- combining the received search results in a single search result list;
- and presenting (96e) said list.

14. Method according to claim 13, the method comprising
, for at least one search result in the single search result list,
- sending (96f, 96g) a query based on the at least one search result to a recommendation engine (83)
- the recommendation engine (83) generating at least one related result based on the query
- receiving (96h) the at least one related result and presenting said related result.

15. Server node (20) having one or more of a
- search proxy device (6);
- recommendations engine (83);
- personalisation store (84);
- audience measurement system (85);
- catalog store (95);
- content metadata discovery component (87);
- personal planer server (94);
- unified metadata system (93);
- staglS (86);
having any of the features according to any of the claims 1-14.
